Europäisches Patentamt

European Patent Office

Office européen des brevets

(11) Publication number : **0 488 736 A2**

# (12) EUROPEAN PATENT APPLICATION

(21) Application number : **91311024.3**

(22) Date of filing : **28.11.91**

(51) Int. Cl.⁵ : **C01B 25/26, C01B 25/32, C01B 25/223, C01B 25/28, C01B 25/30, C01B 25/34**

A request for addition of 5 figures or correction of the description has been filed pursuant to Rule 88 EPC. A decision onthe request will be taken during the proceedings before the Examining Division (Guidelines for Examination in the EPO, A-V, 2.2).

(30) Priority : **28.11.90 MX 23522**

(43) Date of publication of application :
**03.06.92 Bulletin 92/23**

(84) Designated Contracting States :
**AT BE CH DE DK ES FR GB IT LI NL SE**

(71) Applicant : **FOSFATOS INDUSTRIALES, S.A. De C.V.**
**Insurgentes Sur 1871 Piso 6**
**Mexico D.F. 01020 (MX)**

(72) Inventor : **Orlaineta, Victor Manuel Roy**
**Colina de las Ventiscas 39**
**Naucalpan Estado de Mexico (MX)**
Inventor : **Dominguez, Roberto Antonio Navarro**
**Retorno San Juan 974 Pte. -Cd. Victoria Tamaulipas (MX)**
Inventor : **Harvill, Raul Baz**
**Manantial 85**
**Pedregal San Angel Mexico D.F. (MX)**

(74) Representative : **Clifford, Frederick Alan et al**
**MARKS & CLERK 57/60 Lincoln's Inn Fields**
**London WC2A 3LS (GB)**

(54) **A process for the direct manufacture of ortho-phosphates from impure calcium phosphates.**

(57)    A novel process for the direct manufacture of phosphates (ortho-phosphates) starting with impure calcium phosphates. This process obviates those disadvantages associated with the removal of impurities in the furnace process or in the wet process. The process according to this invention comprises firstly adding sulphuric acid or phosphoric acid to phosphate rock, as needed, in order to transform said ore into monocalcium phosphate is thereafter water extracted and reacted with a given sulphate in order to obtain the corresponding phosphate as well as calcium sulphate. The sulphate to be used in this reaction is selected in accordance with the cation to be exchanged for calcium. There are four main embodiments of this process, all of which represent an advantage regarding the heretofore known processes.

EP 0 488 736 A2

## BACKGROUND OF THE INVENTION

This invention relates to the manufacture of orthophosphate.

All phosphorus compounds commercially employed are derived from apatite. Apatite is a class of material which can be represented by the following general formula:

$$A_{10}(XO_4)_6Z_2$$

wherein:

A is chosen from the divalent elements Ca, Sr, Mn, Pb, Mg, Ba, Zn, Cd and, occasionally, Fe and Cu; or the monovalent elements Na, K, Rb and possibly Ag; the rare earths Sc, Y; and the trivalent elements Bi and possibly Ti;

$XO_4$ is chosen from $SiO_4$, $SO_4$, $AsO_4$, $VO_4$, $CrO_4$, $BeO_4$, $BO_4$ and possibly $GeO_4$, $AlO_4$ and $Fe(III)O_4$;

Z = F, OH, Cl, Br, I, and may be O in defective apatites or in some cases is replaced by $CO_3F$ or $CO_3OH$.

Calcium compounds are predominant among apatites, the most common of the varieties of which where $XO_4 = PO_4$ are the following:

– Fluorapatite, which can be found in igneous rocks, and corresponds to the formula $Ca_{10}(PO_4)_6(F,OH)_2$.

– Francholite, which can be found in sedimentary rocks, and corresponds to the formula $Ca_{10}(PO_4)_{6-x}(CO_3)_x(F,OH)_{2+x}$.

– Dahlite, which can be found in fossilised bones, and the formula of which is $Ca_{10}(PO_4)_{6-x}(CO_3)_x(OH,F)_{2+x}$.

– Hydroxylapatite, which can be found in rocks derived from guano, of the formula $Ca_{10}(PO_4)_6(OH)_2$.

Ores containing these varieties of apatite are generically known as phosphate rock, and substantially comprise a tribasic calcium phosphate with considerable amounts of impurities, such as carbonates, fluorine, impurities from adjoining minerals or impurities substituted on to the crystal network base of apatite.

The most utilised phosphorus derivatives are applied to fertilizers. In this instance, the amount and nature of the impurities present therein are not of importance, What is important, in said instances, is that phosphates can be assimilable for plants.

In the production of phosphates for agricultural use, phosphate rock is generally treated with sulphuric or phosphoric acids, in order to transform apatite into a mixture of monocalcium and dicalcium phosphates, or alternatively transform said apatite into an impure phosphoric acid, the so-called black or green acid, which is further converted into ammonium phosphates for agricultural applications, by means of neutralisation with ammonia.

On their side, phosphorus derivatives, which are not intended for agricultural uses, require removal to a greater or lesser degree, in accordance to the particular application thereof, of those impurities present in the phosphate rock. Up to this date, two main purification processes have been used, to wit:

(i) The furnace process, wherein phospate rock is reduced with carbon, in the presence of silica, in order to obtain elementary phosphorus, which is removed as a gas and condensed thereafter. To this end, huge electric furnaces are required, the cost of the operation of which is very high, and which produce high levels of environmental pollution. Elementary phosphorus thus produced, is in turn employed in a number of different syntheses or, in the alternative, is oxidised to convert it into phosphorus pentoxide. This latter is absorbed in water in order to produce high-purity phosphoric acid (the so-called furnace acid). The interesting phosphates are produced starting with said acid, by means of neutralisation with a corresponding base.

(ii) The wet process, wherein an impure phosphoric acid is produced first, and is purified later. There are many and different purification processes, the great majority of which are based on solvent extraction. At the end, a substantially pure acid is obtained, from which the purified phosphates of interest are derived through a neutralisation with the corresponding base. The acid, as a general rule, does not however reach the purity levels of the furnace acid, whereby undesirable slurries and precipitates are generated in this process.

In the prior art, the manufacture of ortho-phosphates starting from furnace acid has become rather uncommon due to increasing pressure from ecological groups and also due to the high cost of the acid. Furthermore, a great deal of the end use for said furnace acid does not require such a high degree of purity.

However, purification by the wet process only is attractive for high-volume production, as the investment required is considerable and an adjoining fertilizers operation would be required for economic commercialisation of the purification byproducts.

Furthermore, known alternatives for the separation of acid from impurities, have been: extracting with an organic solvent, forming an intermediate compound, and crystallising the $H_3PO_4$. Most of the specific purification processes known, both at commercial and laboratory levels, are based in the solvent extraction. Exemplary of a few of said specific processes, almost all of them of the solvent-extraction type, are the BESA-2 process of Bohna Engineering & Research Co., the methanol-$NH_3$ process of the Tennessee Valley Authority;

the TSP process of Maruzen Finechemical Co. Ltd., the Bridger et al process, starting from monocalcium phosphate; the Prayon process, of Société Prayon; the "cleaning" IMI process of Israel Mining Industries; the heptanol process of USS Agri-Chemicals, Travancore Ltd., the Toyo Soda Manufacturiang Co. Ltd., process; the IMI process by the HCl route, of Israel Mining Industries; the RP process of Rhone-Poulenc Chimie Minerale; the crystallisation process of Albright & Wilson Ltd.; the M-M process or Multi-Minerals Ltd.; the Montedison process of Montedicon SpA; the Allied process of Allied Chemical Corp.; the STR process of Società Italiana Resine; the PCUK process or Produits Chimiques Ugine Kuhlmann; the urea phosphate process of the Tennessee Valley Authority; and other known processes. All of these processes are well documented in the large amount of scientific literature existing in this field, and it is not considered as necessary to go further on this subject. However, it is to be pointed out that none of said processes use the basics of this invention and particularly, the insolubilisation of impurities, in a simple, economical and versatile process.

Certain recent developments, such as US Patent No. 4,585,636, granted on April 29, 1986 to Alexander Iosef, Menachem Bar-on, Jacob Oren and Dabogert Kellerman, assignors to Negev Phosphates Ltd., explore new alternatives, but remain far from the present invention.

Given the disadvantages of the routes of purification for phosphate rock of the prior art, there is thus a need to find further alternatives requiring not of such hugh investments as in the wet process, that do not present the environmental problems as the furnace process, and permitting a more direct manufacture of the phosphates or ortho-phosphates starting from impure calcium phosphates.

The direct production of phosphates starting from phosphate rock has been recently proposed (see, for instance, "Direct Production from Phosphate Rock", Phosphorus & Potassium, no. 164, November-December 1989). However, said proposition has been effected substantially for the production of fertilizer phosphates, and phosphates for other uses are only slightly involved. The Mexican Institute of Petroleum offers a process to obtain dicalcium phosphate starting from triple superphosphate, by employing a selective precipitation.

The present invention makes use of the insolubilisation of impurities, but advantageously combined with the reaction between a sulphate and monofalcium phosphate in order to produce directly the corresponding phosphate, without phosphoric acid as an intermediate product. It allows the use of equipment and operations simpler than those of conventional processes with a much greater versatility, allows adjustment to the manufacture of various types of phosphates, and to a continuous or intermittent operation of the process, thus adapting the same to high or low volumes, independently of the manufacture of fertilizers.

## SUMMARY OF THE INVENTION

This invention attains the intended objects due to the combination of several steps, consisting substantially of:

– adding to a phospate rock material a necessary amount of sulfuric acid or phosphoric acid to transform said phosphate rock material into monocalcium phosphate;

– subjecting said material to aging, in order to induce the insolubilization of most of impurities;

– water extracting said monocalcium phosphate; and

– reacting said monocalcium phosphate with a given sulfate, in order to obtain both the corresponding phosphate and calcium sulfate.

In order to attain a high insolubilization of said impurities, an acid:rock ratio is to be employed of such a level as to permit a suitable setting of the reaction mass.

## BRIEF DESCRIPTION OF THE ANNEXED DRAWINGS

The invention will be described in a more detailed manner by reference to the annexed designs, which are integral part of this invention, and wherein:

FIGURE 1 is a flow-chart illustrating the basic process of this invention for the obtaining of ortho-phosphates.

FIGURE 2 is a flow-chart illustrating a first embodiment of the process of this invention, wherein an extraction and a reaction steps are carried out simultaneously.

FIGURE 3 is a flow-chart illustrating a second embodiment of the process of this invention, adapted to obtain dicalcium phosphate.

FIGURE 4 is a flow-chart illustrating a third embodiment of the process of this invention, wherein dicalcium phospate and phosphoric acid are obtained; and

FIGURE 5 is a flow-chart illustrating a fourth embodiment of the process of this invention, wherein phosphoric acid is obtained.

## DESCRIPTION OF A PREFERREDE EMBODIMENT

A presently preferred embodiment of the invention will be described hereinbelow in order to illustrate further details of the invention. Nevertheless, it is to be taken into account that said detailed disclosure does not limit the scope of the present invention; said scope being only defined by the appended claims.

The basic process for the obtaining of phosphates consists in adding to the phosphate rock material a necessary amount of sulfuric acid or phosphoric acid in order to transform said phosphate rock into monocalcium phosphate. The usual reaction, in a simplified form, are as follows:

$$Ca_{10}(PO_4)_6F_2 + 7H_2SO_4 \longrightarrow 3Ca(H_2PO_4)_2 + 7CaSO_4 + 2HF$$
$$Ca_{10}(PO_4)_6F_2 + 14H_3PO_4 \longrightarrow 10Ca(H_2PO_4)_2 + 2HF$$

When sulfuric acid is employed, calcium sulfate is further obtained, which is an impurity for the monocalcium phosphate; however, as the same is water insoluble does not constitute a problem in the extraction step but, by the contrary, means a saving in sulfuric acid and calcium.

On its side, the use of phosphoric acid has the advantage of being free of calcium sulfate production; but, as this acid is obtained from sulfuric acid, calcium sulfate is removed from the phosphoric acid plant. In every case, there is still a lower consumption of sulfuric acid and an additional source of calcium is not necessary. In the prior art, one of the existing disadvantages is that all of the calcium was first removed from the process and afterwards, it was necessary to add calcium again.

One of the key steps in the process is the step of insolubilization of the impurities. The reaction between phosphate rock and the concentrated acid produces very scarce liquid phase, with the result that the reaction mass becomes a paste. A portion of the compounds thus obtained are in fact hydrates, whereby, upon the advancement of the reaction, a point is reached wherein the reaction mass sets. Due to this, the reaction rates are very slow, thus requiring of a certain period of time for said reactions to become completed.

Generally, the main impurities are F, Fe, Al, $SiO_2$, Na, K, Mg and organic materials. There are also traces of many other elements. The more abundant impurity is fluorine, which becomes transformed into HF during the acidification. Said HF, in turn, reacts with silica in order to produce gaseous volatile derivatives evolving from the reaction mass, as well as various insoluble fluosilicates. Thus, fluorine is eliminated partially through partial volatilization during acidulation, and the remainder is fixed when the same is formed into water-insoluble compounds, which also insolubilize a great portion of the sodium, potassium and magnesium present therein.

On the other hand, iron and aluminum, together with the metal impurities traces, tend to form complex calcium phosphates, that are water-insoluble. Also the organic materials present therein are transformed into water-insoluble derivatives. Some of the impurities present in said rock are insoluble in said acid and, therefore, are also water-insoluble.

The key to obtain a high insolubilization of said impurities is the use of an acid:phosphate rock ratio such that provides for a suitable setting of the reaction mass, so as the same can be manipulated and maintained in aging for a time sufficient for the reactions being carried out to become completed. As said reactions are effected in a practically solid medium, the formation of a certain amount of dicalcium phosphate is unavoidable. Said reactions are as follows:

$$Ca_{10}(PO_4)_6F_2 + 4H_2SO_4 \longrightarrow 6CaHPO_4 + 4CaSO_4 + 2HF$$
$$Ca_{10}(PO_4)_6F_2 + 4H_3PO_4 \longrightarrow 10CaHPO_4 + 2HF$$

The parameters to be controlled to the greatest possible extent, in order to obtain the maximum yield of mono-calcium phosphate are the acid:phospate rock ratio, the acid dilution and the aging time or curing time. Thus, there is also obtained a minimal formation of dicalcium phosphate and maximal insolubilization of impurities.

Said monocalcium phosphate is water-soluble although its solubility is not quite high. In order to extract said monocalcium phosphate from the solid obtained through acidification of phosphate rock, only the minimim amount needed to obtain a non-saturated solution of monocalcium phosphate and the maximum recovery of water-soluble phosphorus must be used. The temperature and extraction time must be the minimum possible so that said monocalcium phosphate is not transformed intro dicalcium phosphate, according to the following formula:

$$Ca(H_2PO_4)_2 \longrightarrow CaHPO_4 + H_3PO_4$$

The greater the amount of dicalcium phosphate formed, the lesser the yield of monocalcium phosphate and lower the purity, since, upon formation of phosphoric acid, this latter tends to leave a portion of the water-insoluble impurities into solution.

There can be still certain amounts of phosphorus in the residue, which can be recovered in order to increase the yield of the process. One manner could be by treating said residue with diluted sulfuric acid in an amount sufficient to transform said dicalcium phosphate into phosphoric acid, filtering the insolubles to separate and discard the same. The phosphoric acid obtained is recirculated to the step of attack to the phosphate rock.

4

It has been also discovered that the controlled acidification of the rock can be carried out in such a manner that fertilizer superphosphates can be obtained. Likewise, said process enables the starting with superphosphates commercially available to extract monocalcium phosphate under the above stated conditions. In said instance, it is not necessary to have devices suitable for acidulation and curing steps.

The monocalcium phosphate liquor is very important to provide a fluid medium wherein said monocalcium phosphate can react with the sulfate of the cation, the phosphate of which is desired, by exchanging said cation for said calcium, thanks to precipitation of insoluble calcium sulfate. An example of this principle is given hereinbelow, wherein M is a monovalent cation and D is a divalent cation:

$$Ca(H_2PO_4)_2 + M_2SO_4 ---> 2MH_2PO_4 + CaSO_4$$
$$Ca(H_2PO_4)_2 + DSO_4 ---> D(H_2PO_4)_2 + CaSO_4$$

The specific reaction in particular is a function of the solubility of the sulfate and the phosphate seeking to be obtained. The following examples of specific reactions can be given:

$$Ca(H_2PO_4)_2 + (NH_4)_2SO_4 ---> 2NH_4H_2PO_4 + CaSO_4$$
$$Ca(H_2PO_4)_2 + Na_2SO_4 ---> 2Na_2H_2PO_4 + CaSO_4$$
$$Ca(H_2PO_4)_2 + K_2SO_4 ---> 2K_2H_2PO_4 + CaSO_4$$
$$Ca(H_2PO_4)_2 + MgSO_4 ---> Mg(H_2PO_4)_2 + CaSO_4$$

In all of the above reactions, the calcium sulfate formed is filtered out; the corresponding phosphate liquor can be evaporated in order to crystalize the monobasic orthophosphate, or said liquor can be treated with the corresponding alcali to form said dibasic, or tribasic ortho-phosphates or mixtures thereof; all of which can be crystalized by evaporation in a conventional manner. When necessary, the pH ran be adjusted with alcali prior to the filtration. During the evaporation step, some of the impurities solubilized during the extraction are to be evaporated, as well as the calcium sulfate saturated in said liquor. This can result in the clarification, in a given time before de cristalization ofr said phosphate.

The process briefly disclosed hereinabove can be embodied in several embodiments, which are disclosed in the following.

## EMBODIMENT A

A first embodiment of the basic process consists in the possibility of reducing the steps of the process; this is attained by a combination of the steps of extracting and reacting with sulfate, by reacting the acidification product directly with said sulfate. To this end, it is required to add water in order to maintain the formed phosphate dissolved, and there can be necessary to adjust the pH. The amount of dicalcium phosphate present must be converted into the corresponding dibasic phosphate; to this end, it is required an elongated contact time, since the reaction is slower than the reaction of the monocalcium phosphate. This embodiment is illustrated in FIGURE 2.

## EMBODIMENT B

A second embodiment of the basic process relates to the obtaining of high purity, food grade dicalcium phosphate. In this instance, said process is highly simplified, as it is only required the addition of $Ca(OH)_2$, $CaCO_3$ or any suitable calcium compound, to the monocalcium phosphate liquor to precipitate said dicalcium phosphate. This latter is separated by means of filtration, and the residual liquor can be recirculated to the extraction step. An additional source of calcium must be employed, since said monocalcium phosphate is to be formed first, prior to the separation of the impurities; but there is the advantage of a lower consumption of alkali than when starting directly from phosphoric acid. A preferred condition is that a hydroxy, carbonate or other high purity compound is used to prevent the impurities from entering into the system. This embodiment is depicted in FIGURE 3.

## EMBODIMENT C

In this embodiment, the obtaining of dicalcium phosphate can be combined with the obtaining of purified phosphoric acid. This is made possible upon taking advantage of the hydrolysis of monocalcium phosphate into dicalcium phosphate and acid. To this end, the monocalcium phosphate liquor is evaporated until the desired concentration is obtained. Said dicalcium phosphate is precipitated and then separated by filtration. The residue liquor contains phosphoric acid and residual monocalcium phosphate. Sulfuric acid is then added in order to precipitate said calcium, and then is filtrated.

The filtrate is a phosphoric acid saturated with calcium sulfate, whereby the same is concentrated by evaporation to greater than 40% phosphorus pentoxide, $P_2O_5$, so as to induce the whole precipitation of calcium sulfate and some other remaining impurities. Said concentrated phosphoric acid is clarified and the clarification slurries are recirculated to the calcium precipitation step. This embodiment is depicted in FIGURE 4.

**EMBODIMENT D**

Another further possibility within the general concept of the process of this invention is the use of sulfuric acid instead a sulfate, in order to obtain phosphoric acid instead a phosphate. To the monocalcium phosphate liquor it is added the sulfuric acid needed to precipitate the calcium present therein. It is then filtrated in order to separate said calcium sulfate; then the filtrate is concentrated by evaporation and the concentrated acid is clarified. The clarification slurries are recirculated to the calcium sulfate filtration step. Said phosphoric acid ran be sent to direct usages or, in turn, can be employed to obtain different phosphates, without those restrictions found with the solubility of the sulfate to be used. Said embodiment is depicted in FIGURE 5.

Further embodiments of the basic process are possible in accordance with the present invention; but those already disclosed in brief are the presently preferred ones. In all of said instance:, it is important to have in mind that the more relevant aspects of the invention can be summarized as follows:

– The obtaining of insolubilization of impurities in the phosphate rock by means of a partial acidification thereof, and a reaction time relatively long, which is more economical and simpler than the production of elementary phosphorus or the production of phosphoric acid by wet process and the further elimination of the acid impurities.

– Taking advantage of the reaction between a sulfate and monocalcium phosphate to the direct production of the corresponding phosphate, without the intermediate step of phosphoric acid preparation.

– The use of equipment and operations simpler than those employed with the conventional processes.

– Great versatility to be adjusted easy and quickly to the manufacture of several types of phosphates and to a continuous or intermitent operation of the process, thus enabling for the application to either high or low production volumes, without depending on the manufacture of fertilizers.

**EXAMPLES**

Some practical examples of the basic process of this invention are described. These examples are for the purpose of demonstrate the following:

1) that there is the need of subjecting the partially acidified phosphate rock to a curing step, as a means to obtain the insolubilization of the impurities present therein;

2) that the extraction of the monocalcium phosphate formed and the prevention of its hydrolysis are favored when short times and low temperatures of extraction are employed;

3) that either purified calcium phosphate or purified phosphoric acid can be obtained from the monocalcium phosphate liquor;

4) that monoammonium phosphate can be obtained directly by means of a reaction of the monocalcium phosphate and ammonium sulfate;

5) that an alcohol can be employed to induce the precipitation of the salts and to extract phosphoric acid.

These five items are fully demonstrated to the light of the following examples, which are not to be considered as a limit for the invention; with the limits of the invention being defined only and exclusively by the scope of the appended claims.

**EXAMPLE 1**

150 g of wet process phosphoric acid, the so-called black acid, with 52.4% $P_2O_5$ and 0.37% F (P/F=62) were neutralized with 35.8 g of solid $CaCO_3$, enough to transform said $P_2O_5$ from the acid into monocalcium sulphate, and said sulfates into calcium sulfate. Additional 138.2 g of water were added to maintain the monocalcium phosphate thus formed, in solution. Said reaction was carried out to boiling (92°C) for two hours. During the boiling, the evaporated water was replenished. It was hot filtered under vacuum. 14.8 g of wet residue and 300 g of a green liquor with 26.2% $P_2O_5$ and 0.18% F (P/F=64) were obtained.

**EXAMPLE 2**

12.0 g of the same acid as in Example 1, were reacted with 100 g of triple superphosphate, having 47.35% $P_2O_5$ and 2.10% F (P/F=10), and to this 335 g of water were added in order to maintain the monocalcium phosphate solution. This reaction mixture was maintained to boiling for an hour. The evaporated water was replenished by steps. Then it was hot-filtered under vacuum, and 507.9 g of a green liquor and 47.3 g of wet residue

EP 0 488 736 A2

were recovered. Said liquor contained 19.81% $P_2O_5$ and 0.30% F (P/F=29).

EXAMPLE 3

Liquors prepared under Examples 1 and 2 were admixed thus producing a liquor 21.37% $P_2O_5$, 3.83% CaO and 0.28% F (P/F=33). A CaO/$P_2O_5$ ratio of 0.179 indicates the presence of an equivalent to 16.0% monocalcium phosphate and 16.1% $H_3PO_4$. 280.3 g of this liquor were taken and admixed with 173.8 g methanol. Said mixture was maintained under agitation for 30 minutes.

Then the mixture was vacuum filtered and the residue was washed in methanol. 125.2 g of a wet residue and 285.3 g of liquor (alcoholic mixture) were obtained. The dry residue, monocalcium phosphate, amounted to 51.3 g, with 23.7% p, 11.6% CaO and 0.67% F (P/F=35). The filtered liquor, formed by phosphoric acid, monocalcium phosphate, water and alcohol, was evaporated under atmospheric pressure to remove water and methanol, with a remainder of 104 g of a concentrated liquor having 30.86% $P_2O_5$, 2.35% CaO, 0.06% F (P/F=224), 0.22% $Fe_2O_3$, 0.22% $Al_2O_3$ and 0.78% MgO.

EXAMPLE 4

In this example, a wet process acid was utilized with 28.9% $P_2O_5$, 0.14% CaO, 1.64% F and 53.83% of free water and phosphate rock with 58.8% $P_2O_5$, 43.7% CaO, 3.7% F and 0.8% moisture. 1490 g acid, 225.7 g phosphate rock and 75 g water were taken. Phosphate rock was slowly added for a period of 30 minutes. Temperature rose up to 50°C. Then, the mixture was heated to 80°C and agitation was maintained for an hour. Finally, 10 g of an activated clay, 5 g of activated charcoal and 15 g 40% NaOH were added. Agitation and temperature were maintained further for 30 minutes.

The reaction mixture was hot filtered under vacuum. The residue was washed with 134 g water and said water was incorporated into the first filtrate. 276.6 g of washed residue were obtained which, after drying under 50°C, were reduced t 198 g. The filtrated liquor mass, thus obtained, was of 1632.8 g. To said filtrate 1022.7 g methanol (liquor: alcohol ratio 1:1 volume) were added, and 594.1 g of a wet solid and 1435.7 g of filtrate were recovered. The solid, dried to 50°C gave 335.1 g of a product, monocalcium phosphate, having 19.8% P, 9.3% Ca and 8.2% F (P/F=2). The filtrate rested with 19.93% $P_2O_5$, 1.41% CaO and 0.15% F (P/F=58).

EXAMPLE 6

A granulated triple superphosphate was utilized, of a commercial fertilizer type, having 47.88% total $P_2O_5$, 39.28% water soluble $P_2O_5$, 24.52% CaO, 2.13% $SO_3$, 1.18% moisture, 2.1% F and 0.69% free $H_3PO_4$. Several extractions were carried out, by taking 211.2 g superphosphate and adding increasing amounts of water. The suspension was maintained under agitation and to boiling (94-96°C) for an hour. Then, it was hot filtered, under vacuum. The filtration residue was dried to 60°C. Results are as follows:

| Testing No. | 6.1 | 6.2 | 6.3 | 6.4 |
|---|---|---|---|---|
| Extraction water, g | 500 | 1000 | 1500 | 2000 |
| Water solution g$H_2O$/g$P_2O_5$ | 6 | 12 | 18 | 24 |
| Wet residue, g | 219.4 | 142.9 | 168.8 | 158.0 |
| Monocalcium phospate liquor: | | | | |
| - Mass, g | 471.6 | 1000.2 | 1475.7 | 1992.3 |
| - % $P_2O_5$ | 10.51 | 7.22 | 4.98 | 4.16 |
| - % F | 0.08 | 0.02 | 0.01 | 0.01 |
| - % extr. $P_2O_5$ water soluble | 60 | 87 | 89 | 100 |

EXAMPLE 7

Several extractions were carried out, according to the procedure of Example 6, but by employing in all of them 500 g water and by varying the extraction time. The results obtained were:

7

| Testing No. | 7.1 | 7.2 | 7.3 | 7.4 |
|---|---|---|---|---|
| Extraction water, g | 500 | 500 | 500 | 580 |
| Water solution $gH_2O/gP_2O_5$ | 6 | 6 | 6 | 6 |
| Extraction time, hrs | 1 | 2 | 3 | 4 |
| Wet residue, g | 185.7 | 210.1 | 196.3 | 208.7 |
| Dry residue, g | 99.1 | 110.3 | 107.4 | 113.8 |
| Monocalcium phosphate liquor: | | | | |
| - Mass, g | 499.2 | 414.4 | 536.5 | 519.1 |
| - % $P_2O_5$ | 12.19 | 10.68 | 10.54 | 10.45 |
| - % F | 0.04 | 0.04 | 0.04 | 0.04 |
| - % CaO | 3.37 | 2.17 | 2.2 | 2.12 |
| - % extr. $P_2O_5$ water solution | 73 | 66 | 68 | 65 |

EXAMPLE 8

486.4 g of commercial simple superphosphate (20.56% total $P_2O_5$) were admixed with 500 g water, for an hour and carried into boiling. Then, the reaction mixture was hot filtered under vacuum, thus obtaining 560.6 g of a wet residue and 391.5 g of a brown colored monocalcium phosphate liquor with 12.18% $P_2O_5$. Said residue beholded a great amount of liquid phase.

EXAMPLE 9

Liquors from Example 6 were admixed, thus obtaining a solution with 5.97% $P_2O_5$. 4758.6 g of said mixture were taken and concentrated by evaporation until an initial cloudiness was observed. Thus, 1694.9 g of concentrated liquor were obtained, which were filtered, with a wet residue of 137.4 g and 1557.5 g of a liquor saturated with 14.82% $P_2O_5$. The residue was dried to 60°C, remaining 105.9 g of a dicalcium phosphate with 50.11% $P_2O_5$, 0.11% F (P/F 199) and 34.87% CaO.

EXAMPLE 10

600 g of the concentrated liquor from Example 9 were admixed with 407 g methanol for five hors to room temperature (20°C). It was vacuum filtered obtaining thus 78.4 g of wet residue and 904.1 g of a filtrate (a mixture of methanol and acid). Said residue was dried to 60°C, remaining 45.9 g of a dicalcium phosphate having 50.74% $P_2O_5$, 0.26% F (P/F=85) and 33.66% CaO. Said filtrate was concentrated under evaporation in order to discard a portion of water and methanol, thus leaving a disolution with 35.48% $P_2O_5$, 0.01% F (P/F=1548), 1.64% CaO, 0.13% $SO_3$, 1.18% MgO and undetectable amounts of Fe and Al.

EXAMPLE 11

To the remaining 957.5 g of concentrated liquor in Example 9, 56.9 g of sulfuric acid of 98% $H_2SO_4$, by maintaining the reaction mass to 80°C. The sulfuric acid addition was carried out in an hour. The reaction mass was permitted to cool and aged for 24 hours, and then was vacuum filtered, thus obtaining 190.4 g of a wet residue (98 g dry residue) and 800.3 g of a diluted phosphoric acid. Said acid was concentrated by vacuum evaporation. It was filtered under vacuum, thus obtaining 4.3 g of a residue and 222 g of an acid having 53.8% $P_2O_5$, 0.02% F (P/F=1174), 0.00% CaO, 2.52% $SO_3$, 1.36% MgO and non-detectable amounts of Fe and Al.

EXAMPLE 12

Liquors from Example 7 were admixed together, thus obtaining a solution with 10.90% $P_2O_5$ and 2.45%

Ca0. 1131 g of said liquor were reacted with 53.4 g of sulfuric acid of 98.6% $H_2SO_4$. The reaction mixture was subjected to a constant agitation and maintained to a mean temperature in the range of 78°C. Sulfuric acid was added slowly during a period of one hour. 100 g of water were added slowly during a period of one hour. 100 g of water were added to replenish the water lost in evaporation. The end suspension (1196.6 g) contained 6.7% of suspended solids. It was then vacuum filtered, thus obtaining 160.1 g of a wet residue (80.4 g dried residue) and 1020.8 g of filtrated acid.

Said filtrate was passed through a column with 100 cubic centimeters (cc) of wet Amberlite IR-120 (resin) previously conditioned. Separately the first 100 cc, two 300 cc fractions and one 100 cc fraction, were collected. Said column was rinsed with 100 cc water, and a last 100 cc fraction was collected, and put together with the first (tailings). The analyses for these fractions resulted in the followings:

| Fraction | Mass. g | % $P_2O_5$ | % CaO | % MgO |
|---|---|---|---|---|
| Feedstock | 900.0 | 10.93 | 0.18 | 0.22 |
| Tailings | 206.7 | 5.20 | 0.01 | 0.04 |
| First 300 cc | 329.7 | 10.92 | 0.00 | 0.00 |
| Second 300 cc | 330.9 | 10.92 | 0.00 | 0.05 |
| Last 100 cc | 134.4 | 10.96 | 0.03 | 0.15 |

EXAMPLE 13

Several extractions were carried out in the manner disclosed in Example 6, with an extraction time of 30 minutes and with a variable amount of water and variable temperature. The results were as follows:

| Testing No. | 13.1 | 13.2 | 13.3 |
|---|---|---|---|
| Superphosphate, g | 696.2 | 417.7 | 835.4 |
| Extraction water, g | 2500 | 2000 | 2000 |
| Water solution $gH_2O/gP_2O_5$ | 9.1 | 12.2 | 6.1 |
| Extraction time, hours | 0.5 | 0.5 | 0.5 |
| Temperature, °C | 23 | 60 | 95 |
| Wet residue, g | 382.3 | 258.4 | 651.7 |
| Dry residue, g | 230.3 | 153.1 | 389.6 |
| Monocalcium Phosphate Liquor: | | | |
| - Mass, g | 2788.8 | 2132.5 | 2073.2 |
| - % $P_2O_5$ | 8.94 | 6.93 | 12.80 |
| - % F | 0.05 | 0.02 | 0.05 |
| - % CaO | 3.02 | 2.07 | 3.29 |
| - % $Fe_2O_3$ | 0.02 | 0.02 | 0.05 |
| - % $Al_2O_3$ | 0.00 | 0.01 | 0.02 |
| - % MgO | 0.08 | 0.07 | 0.11 |
| - % extr. $P_2O_5$, water solution, T | 91 | 92 | 81 |

EXAMPLE 14

Starting materials of phosphate rocks from different origins, to wit Florida (FLD), Marroc (OCP) and Baja California (SJC), were reacted with concentrated acids, derived from those same rocks, by employing a ratio of $P_2O_5$ acid/$P_2O_5$ rock of 2.5. Said rock was mixed vigorously with said phosphoric acid until setting (5 minutes). Said mixture was maintained to 60°C for 15 days, in order to induce the impurities insolubilization. Various amounts of cured products were treated with water to extract monocalcium phosphate. The results obtained were as follows:

| Testing No. | 14.1 | 14.2 | 14.3 | 14.4 | 14.5 |
|---|---|---|---|---|---|
| Cured Product: | | | | | |
| - Origin of the rock | OCP | FLD | OCP | FLD | SJC |
| - Mass, g | 978.8 | 975.6 | 1158.3 | 1211.6 | 1029.8 |
| - % $P_2O_5$ | 49.24 | 47.42 | 47.06 | 41.49 | 42.24 |
| - % CaO | 21.39 | 21.67 | 20.04 | 18.13 | 17.59 |
| - % $Fe_2O_3$ | 0.29 | 1.25 | 0.28 | 1.54 | 0.64 |
| - % $Al_2O_3$ | 0.24 | 1.21 | 0.21 | 1.13 | 1.44 |
| - % MgO | 0.42 | 0.46 | 0.41 | 0.38 | 0.20 |
| - % F | 1.74 | 1.58 | 1.89 | 2.28 | 1.31 |
| - % $SO_3$ | 1.84 | 1.82 | 2.80 | 1.72 | 6.77 |
| - % C | 0.11 | 0.22 | 0.09 | 0.18 | 0.43 |
| - % moisture | 4.10 | 3.39 | 8.81 | 13.14 | 11.04 |
| Extraction water, g | 3670.0 | 3654.0 | 4170.0 | 4275.0 | 3635.0 |
| $gH_2O/gP_2O_5$ total | 7.6 | 7.9 | 7.9 | 8.5 | 8.4 |
| Extraction time, hrs | 0.25 | 0.5 | 0.25 | 0.25 | 0.25 |
| Temperature, °C | 25 | 25 | 23 | 25 | 25 |
| Wet residue, g | 402.6 | 587.9 | 382.1 | 585.7 | 458 |

| Testing No. | 14. 1 | 14. 2 | 14. 3 | 14. 4 | 14. 5 |
|---|---|---|---|---|---|
| Monocalcium phosphate liquor: | | | | | |
| - Mass, g | 4246. 2 | 4041. 7 | 4946. 2 | 4999. 9 | 4206. 8 |
| - % $P_2O_5$ | 10. 22 | 8. 74 | 10. 13 | 7. 68 | 9. 10 |
| - % CaO | 3. 57 | 2. 38 | 2. 84 | 2. 06 | 2. 16 |
| - % $Fe_2O_3$ | 0. 03 | 0. 13 | 0. 03 | 0. 05 | 0. 05 |
| - % $Al_2O_3$ | 0. 00 | 0. 13 | 0. 00 | 0. 00 | 0. 19 |
| - % MgO | 0. 12 | 0. 15 | 0. 11 | 0. 13 | 0. 04 |
| - % F | 0. 00 | 0. 00 | 0. 00 | 0. 00 | 0. 00 |
| - % $SO_3$ | 0. 64 | 0. 32 | 0. 03 | 0. 01 | 0. 00 |
| - % C | 0. 00 | 0. 01 | 0. 00 | 0. 01 | 0. 01 |
| $P_2O_5$ total ef. | 90 | 76 | 92 | 75 | 88 |

EXAMPLE 15

A triple superphosphate, of the commercial fertilizer type, was used with 47.58% $P_2O_5$ total and 29.42% of water soluble $P_2O_5$. Extractions were carried out, with a variable portion of water. The monocalcium phosphate liquor thus obtained was concentrated by atmospheric evaporation and filtered. The filtration residue corresponded to a dicalcium phosphate and the filtered liquor corresponded to a mixture of monocalcium phosphate and phosphoric acid. The filtration residues were washed with small amounts of water (about 50 cc) and the washings were incorporated into said filtrates. The results thus obtained were as follows:

| Testing No. | 15. 1 | 15. 2 | 15. 3 | 14. 4 |
|---|---|---|---|---|
| Superphosphate, g | 119. 0 | 159. 0 | 250. 0 | 250. 0 |
| Water, g | 308. 8 | 500. 0 | 228. 5 | 395. 2 |
| $gH_2O/gP_2O_5$ total | 5. 4 | 6. 6 | 1. 9 | 3. 3 |
| $gH_2O/gP_2O_5$ water solution | 6. 6 | 8. 0 | 2. 3 | 4. 0 |
| Extraction time, hours | 0. 25 | 0. 25 | 0. 50 | 0. 08 |

| Testing No. | 15. 1 | 15. 2 | 15. 3 | 14. 4 |
|---|---|---|---|---|
| Temperature, °C | 20 | 20 | 80 | 95 |
| Wet residue, g | 74. 0 | 102. 9 | 149. 1 | 160. 4 |
| Dry residue, g | 40. 9 | 55. 4 | 97. 3 | 95. 4 |
| - $P_2O_5$ , total | 35. 00 | 34. 76 | 40. 00 | 36. 41 |
| Monocalcium Phosphate | | | | |
| liquor, g | 423. 3 | 624. 3 | 329. 4 | 540. 3 |
| - % $P_2O_5$ | 10. 90 | 9. 50 | 21. 10 | 16. 70 |
| $P_2O_5$ Ef. Extr. total | 81 | 78 | 58 | 76 |
| $P_2O_5$ Ef. Extr. water sol. | 98 | 95 | 71 | 92 |
| Evaporated water, g | 183. 5 | 421. 0 | 163. 8 | 370. 4 |
| Wet dicalcium phosphate, g | 37. 4 | 31. 1 | 55. 9 | 81. 9 |
| Dry dicalcium phosphate, g | 26. 5 | 22. 4 | 40. 4 | 59. 3 |
| - % $P_2O_5$ total | 50. 01 | 50. 04 | 52. 54 | 43. 62 |
| Residual liquor, g | 213. 3 | 234. 8 | 167. 2 | 156. 3 |
| - % $P_2O_5$ | 15. 38 | 20. 43 | 28. 96 | 37. 5 |
| Density at 20°C, g/cc | 1. 174 | 1. 230 | 1. 295 | 1. 355 |

EXAMPLE 16

A commercial triple superphosphate was employed, with 44.51% total $P_2O_5$, 43.49% of water soluble $P_2O_5$, 24.91% Ca0, 10.44% S0$_3$ and 0.82% moisture. 250 g superphosphate were mixed with 650 g of water, for 15 minutes, to room temperature (20°C). It was vacuum filtered, thus obtaining 139.5 g of a wet residue (residue I) and 760.5 g of monocalcium phosphate liquor. To this liquor 56 g of commercial chemical lime were added under vigorous agitation for 30 minutes. Temperature rose up to 50°C. The reaction mass was aged for 10 hours and filtered under vacuum, thus obtaining 392.8 g of wet dicalcium phosphate (DCP I) and 455.4 g or residual liquor (liquor I).

To said residual liquor I there were added 250.0 g of superphosphate and 221.2 g water, vigorously admixing for 10 minutes to room temperature. The reaction mass was filtered under vacuum, leaving 138.8 g of wet residue (residue II) and 787.8 g of monocalcium phosphate liquor (1.133 g/cc at 20°C). The dry residue II (81.3 g) contained 32.89% $P_2O_5$ total. To said monocalcium phosphate liquor there were added 56 g lime, with vigorous agitation for 15 minutes. Temperature rose up to 60°C. It was hot filtered, thus obtaining 325.3 g of wet dicalcium phosphate (DCP II) and 518.5 g of residual liquor (pH 6.5, 1.9 g/cc at 20°C).

DCP I and DCP II were mixed to each other and dried to 100°C, leaving 395.8 g of dry DCP with 42.36% total $P_2O_5$, 34.11% Ca0 (Ca0/$P_2O_5$ = 0.80), 0.27% moisture and 1.93% of acid insolubles.

EXAMPLE 17

Residue I from Example 16 was admixed with 250 g of superphosphate and 470 g water, by vigorously agitating for 10 minutes to room temperature. There were then added 125 g ammonium sulfate and the agitation was further continued for 55 minutes, with heating to reach a maximum temperature of about 75°C. A pH measurement, in this moment, showed a value of 3 pH was adjusted to pH 4, by adding 4.5 of ammonia water with 28.5% NH$_3$. The reaction mass was agitated for five more minutes and filtered. 755.7 g of monoammonium phosphate liquor were obtained, with a pH of 3.92 and a density of 1.109 g/cc at 20°C, and 333.3 g of wet residue (gypsum) which, upon being dried (228 g) showed 15.85% total $P_2O_5$, 9.54% of water-soluble $P_2O_5$ and 68.6% of water insolubles.

Monoammonium phosphate liquor was concentrated by evaporation, until a 279.5 g mass was attained; then filtered under vacuum, thus obtaining 131.9 g of wet crystals of mono-ammonium phosphate and 147.6 g of mother liquor with 14.93% $P_2O_5$ and a density of 1.229 g/cc at 20°C. Wet monoammonium phosphate was dried at 100°C, leaving 93.4 g of monoammonium phosphate with 59.21% total $P_2O_5$, 55.15% of water-soluble $P_2O_5$, 2.87% water insolubles and 3.2% $So_3$, with a pH of 4 (1% aqueous solution).

It is clear from the above examples that this invention obtains the objects thereof, that is, that the following conditions are satisfied:

– The means to obtain the impurities insolubilization is the step of curing the partially acidified rock.

– The use of low extraction times and temperatures helps to the extraction of the monocalcium phosphate formed and the prevention of the hydrolysis thereof.

– Purified calcium phosphates can be obtained, or else, purified phosphoric acid, from the monocalcium phosphate liquor.

– Monoammonium phosphate can be obtained directly through the reation of monocalcium phosphate with ammonium sulfate.

– Precipitation of salts and extraction of phosphoric acid can be obtained by the use of an alcohol.

In other words, it will be apparent to those who have experience in the art, that this invention provides a basic process, with a number of embodiments, which provides for the obtaining of a number of products in a simple manner, and that the equipment can be adapted to switch from one product into another, fast and in an economical way. The instant process, specially, does not depends on parallel operations, such as, for instance, the operations to produce fertilizer, for the employment of by-products, whereby the advantages of this invention over the processes already known, are obvious.

This invention has been briefly disclosed with reference to the presently preferred embodiments thereof. However, this invention is capable of various changes and modifications, which are apparent for those skilled in the art; with all of said changes and modifications falling within the scope and spirit of the invention. The same is true relating the equivalents known by those skilled in the art, as all of said equivalents are likewise comprised within the scope of the invention. Thus, for instance, although this application refers to "filtration", it is clear that this term encircles similar concepts, such as centrifugation, decanting or any method suitable to separate a solid from a liquid. The same is true for any other term used in this invention having a broad and general connotation.

## Claims

1. A process for the direct manufacture of ortho-phosphates comprising the following steps:

adding to a phosphate rock material the amount of sulphuric acid or phosphoric acid necessary to transform said phosphate rock into monocalcium phosphate;

subjecting said material to a quiescent step to cause or allow insolubilisation of great preponderance of the impurities present;

extracting said monocalcium phosphate with a liquid capable of dissolving the same; and

reacting said monocalcium phosphate with a sulphate selected to obtain the corresponding phosphate and calcium sulphate.

2. A process for the direct manufacture of ortho-phosphates as claimed in Claim 1, wherein, in the first-recited step, a ratio of acid to rock is employed that facilitates a suitable setting of the reaction mass.

3. A process for the direct manufacture of ortho-phosphates as claimed in Claim 1 or 2 wherein the liquid used to dissolve said monocalcium phosphate is water.

4. A process for the direct manufacture of ortho-phosphates as claimed in claims 1, 2 or 3, wherein a contact time of less than 480 minutes is employed.

5. A process for the direct manufacture of ortho-phosphates as claimed in any one preceding claim, wherein temperatures of less than 100°C are employed.

6. A process for the direct manufacture of ortho-phosphates as claimed in any one preceding claim wherein said calcium sulphate formed is separated by filtration, centrifugation or decanting.

7. A process for the direct manufacture of ortho-phosphates as claimed in any one preceding claim modified in that the extraction and reaction steps are combined by the step of reacting the acidification product directly with said sulphate.

8. A process for the direct manufacture of ortho-phosphates as claimed in Claim 7, wherein an additional amount of water is added to keep the said phosphate formed in solution, and adjusting the pH, when necessary.

9. A process for the direct manufacture of ortho-phosphates as claimed in Claim 7, wherein a relatively longer contact time period is utilised.

10. A process for the direct manufacture of ortho-phosphates as claimed in any one preceding claim, wherein $Ca(OH)_2$, $CaCO_3$ or any other suitable calcium compound is added to said monocalcium phosphate liquor to precipitate dicalcium phosphate.

11. A process for the direct manufacture of ortho-phosphates as claimed in Claim 10, wherein said dicalcium phosphate is separated by filtration, centrifugation or decanting.

12. A process for the direct manufacture of ortho-phosphates wherein said calcium hydroxide, carbonate or other compound utilised is of high purity.

13. A process for the direct manufacture of ortho-phosphates as claimed in any of Claims 1 to 6 but comprising the alternative steps of:
    evaporating the monocalcium phosphate liquor until a desired concentration is attained;
    precipitating dicalcium phosphate, and separation off the same by any suitable separation method;
    adding sulphuric acid to the residual liquor containing phosphoric acid and monocalcium phosphate, to precipitate calcium sulphate, and separating off the same by any suitable separation method;
    concentrating said filtrate by evaporation until the total precipitation of said calcium sulphate and other impurities present is induced;
    collecting said concentrated phosphoric acid, thus obtained, and optionally clarifying the same, when necessary.

14. A process for the direct manufacture of ortho-phosphates as claimed in any of Claims 1 to 6, wherein sulphuric acid is employed in the final step instead of a sulphate in order to obtain phosphoric acid instead of a phosphate.

15. A process for the direct manufacture of ortho-phosphates as claimed in Claim 14, wherein the following alternative steps are employed:
    adding to said monocalcium phosphate liquor sulphuric acid in an amount necessary to precipitate the calcium present as calcium sulphate;
    separating off said calcium sulphate by means of any suitable solid and liquid separation method, concentrating by evaporation said phosphoric acid obtained and when necessary clarifying the phosphoric acid;
    optionally, employing said phosphoric acid obtained to obtain several phosphates, or for direct usages.

16. A process for the direct manufacture of ortho-phosphates as claimed in Claim 1, wherein the insolubilisation of the impurities is carried out by a partial acidification thereof, with a relatively long reaction time.

17. A process for the direct manufacture of ortho-phosphates as claimed in Claim 1, wherein the reaction between said monocalcium phosphate and a given sulphate is effected to give the corresponding phosphate directly without the intermediate formation of phosphoric acid.

18. A process for the direct manufacture of ortho-phosphates as claimed in Claim 1, wherein ammonium sulphate is used in the fourth step to obtain monoammonium phosphate.

19. A process for the direct manufacture of ortho-phosphates as claimed in Claim 1, wherein sodium sulphate is used in the fourth step to obtain sodium phosphate.

20. A process for the direct manufacture of ortho-phospates as claimed in Claim 1, wherein potassium sulphate is used in the fourth step to obtain potassium phosphate.

21. A process for the direct manufacture of ortho-phosphates as claimed in Claim 1, wherein magnesium sulphate is used in the fourth step to obtain magnesium phosphate.

22. A process for the direct manufacture of ortho-phosphates as claimed in Claim 1, wherein a solvent is utilised to induce the salts precipitation and to extract said phosphoric acid.

23. A process for the direct manufacture of ortho-phosphates as claimed in Claim 1, wherein commercial superphosphates are used to optimise the monocalcium phosphate extraction.

24. A process for the direct manufacture of ortho-phosphates as claimed in Claim 1, wherein dicalcium phosphate is obtained from the monocalcium phosphate liquir and lime or calcium carbonate.

25. A process for the direct manufacture of ortho-phosphates as claimed in Claim 1, wherein the monocalcium phosphate extraction residue is treated with sulphuric acid in an amount sufficient to transform all of the calcium present into gypsum, in order to obtain a phosphoric acid capable of being used in further reactions or processes or of being recirculated.

26. A process for the direct manufacture of ortho-phosphates as claimed in Claim 6, further comprising either:
    neutralising with ammonia and separating the monoammonium phosphate liquor, and crystallising by evaporation or by treating with an alcohol; or
    treating said suspension with methanol to extract said phosphoric acid and precipitating further impurities and removing the solids suspended.